# EUROPÄISCHE PATENTSCHRIFT

(11) **EP 1 210 226 B1**
(45) Veröffentlichungstag und Bekanntmachung des Hinweises auf die Patenterteilung: **02.04.2003**
(21) Anmeldenummer: 00964090.5
(22) Anmeldetag: 01.09.2000
(51) Int. Cl.: B32B 3/28, E04C 2/32, B62D 25/00, B21D 47/00

(54) **VERFAHREN ZUR HERSTELLUNG EINES SANDWICH-PANEELS SOWIE ZUR HERSTELLUNG EINES KAROSSERIEBAUTEILS**
METHOD FOR PRODUCING A SANDWICH PANEL AND A BODY COMPONENT
PROCEDE POUR PRODUIRE UN PANNEAU SANDWICH ET UN ELEMENT DE CARROSSERIE

(30) Priorität: 08.09.1999 DE 19942922
(43) Veröffentlichungstag der Anmeldung: 05.06.2002
(73) Patentinhaber: Alcan Kapa GmbH, 49090 Osnabrück (DE)
(72) Erfinder: BEHRE, Kurt, 49078 Osnabrück (DE)
(74) Vertreter: Hano, Christian, Dipl.-Ing.
(86) Internationale Anmeldenummer: EP0008562
(87) Internationale Veröffentlichungsnummer: WO01017764

(56) Entgegenhaltungen:
- WO-A-98/06564
- FR-A- 2 621 677
- GB-A- 2 182 703
- US-A- 3 086 899
- US-A- 3 756 884
- US-A- 5 244 745
- S.P. Parker: "McGRaw-Hill Dictionary of Engineering"; McGraw-Hill Book Company, New York (US); p. 237 (1984)

## Beschreibung

Die Erfindung betrifft ein Verfahren zur Herstellung eines Sandwich-Paneels sowie zur Herstellung eines Karosseriebauteils.

Die Erfindng betrifft außerdem ein Sandwich-Paneel sowie ein Karrosseriebauteil, das durch ein entsprechendes Verfahren hergestellt ist.

Sandwich-Paneele sind aus dem Stand der Technik vor allem als sogenannte Honeycomb Sandwich-Paneele bekannt, deren wabenförmige Zwischenschicht aus einer harten Aluminiumlegierung besteht. Diese wird in einem diskontinuierlichen Verfahren durch Verkleben der einzelnen Strukturen "endlos" gemacht. Schließlich erfolgt ein beidseitiges Aufkaschieren von Deckschichten auf die Wabenstruktur. Die so entstehenden Honeycomb Sandwich-Paneele sind nicht dreidimensional verformbar, da die Wände der Wabenöffungen miteinander verbunden sind. Die Verfahrensführung ist diskontinuierlich und daher relativ unwirtschaftlich.

Bei einem weiteren aus dem Stand der Technik bekannten Verfahren zur Herstellung eines Sandwich-Paneels werden lange PET-Röhren zu einem Bündel zusammengeklebt. Das so erhaltene PET-Röhrenbündel wird dann senkrecht zur Längserstreckung der PET-Röhren in Scheiben geschnitten. Schließlich erfolgt ein beidseitiges Aufkaschieren von Deckschichten auf jede einzelne dieser Scheiben. Auch dieses Verfahren ist nur diskontinuierlich durchführbar.

Der Erfindung liegt die Aufgabe zugrunde, ein Verfahren bereitzustellen, durch das Sandwich-Paneele und Karosseriebauteile mit wenig Aufwand wirtschaftlich hergestellt werden können.

Ferner soll ein konstruktiv einfaches und leichtes Sandwich-Paneel und Karosseriebauteil geschaffen werden.

Diese Aufgabe wird durch ein Verfahren zur Herstellung eines Sandwich-Paneels mit den Merkmalen des Patentanspruchs 1 gelöst. Vorteilhafte und bevorzugte Weiterbildungen des erfindungsgemäßen Verfahrens sind Gegenstand der Ansprüche 2 bis 4.

Ein erfindungsgemäßes Sandwich-Paneel ist Gegenstand des Patentanspruchs 5. Vorteilhafte und bevorzugte Ausführungsformen des erfindungsgemäßen Sandwich-Paneels sind Gegenstand der Ansprüche 6 bis 10.

Der besondere Vorteil des erfindungsgemäßen Verfahrens im Vergleich zu den aus dem Stand der Technik bekannten Verfahren zur Herstellung eines Sandwich-Paneels besteht darin, daß das Verfahren trotz einer Zwischenschicht aus weichem, flexiblem Aluminiummaterial kontinuierlich durchgeführt werden kann.

Ein erfindungsgemäßes Sandwich-Paneel hat eine hohe Festigkeit und ist dabei extrem leicht. Außerdem kann es durch entsprechende Anordnung der Vertiefungen dreidimensional verformbar gestaltet werden.

Erfindungsgemäß hergestellte Sandwich-Paneels können bevorzugt im Automobilbau (Himmel, Hutablagen etc.) und in der Displaytechnik verwendet werden.

Das Einprägen der napfartigen Vertiefungen kann durch Pressen oder durch Tiefziehen erfolgen.

Damit die napfartigen Vertiefungen ohne Beschädigung des Materials geprägt werden können, hat das Material der flexiblen Metallfolie bevorzugt einen Elastizitätsmodul von mindestens 70 x 10³ N/mm².

Die flexible Metallfolie sein besteht zweckmäßigerweise aus Al oder einer Al-Legierung oder aus Cu oder einer Cu-Legierung, die zweckmäßigerweise eine Dicke von 10 µm bis 100 µm, bevorzugt 20 µm bis 100 µm hat.

Die napfartigen Vertiefungen sind im wesentlichen ellipsoidal, sphärisch, zylinderartig, kegelstumpfartig oder pyramidenstumpfartig geformt.

Die Deckschichten können aus Metall, z.B. aus Al oder einer Al-Legierung oder aus Cu oder einer Cu-Legierung bestehen, die bevorzugt 0,5 mm bis 2,0 mm dick ist.

Die Deckschichten können aber auch aus Kunststoff, z.B. aus PET oder PP oder PS oder ABS bestehen.

Auch die Verwendung einer Resopalplatte als Deckschicht ist möglich. Eine solche Resopalplatte ist 0,4 mm bis 2,0 mm, bevorzugterweise 1,3 mm dick.

Die Deckschichten werden bevorzugt auf die flexible Metallfolie aufgeklebt.

Die Deckschichten können nicht nur eben sondern auch gekrümmt sein, da sich die Zwischenschicht an ihre Form anpassen kann. Außerdem können sie Strukturierungen, wie z.B. Rippen aufweisen.

Schließlich ist es auch möchlich, ein Sandwichpaneel mehrlagig auszubilden. Hierzu wird eine weitere Zwischenschicht aus flexibler Metallfolie mit napfartigen Vertiefungen auf einer der Deckschichten angebracht und eine weitere Deckschicht an der Zwischenschicht befestigt.

Ein Verfahren zur Herstellung eines Karosseriebauteils, mit dem die Aufgabe der Erfindung gelöst wird, ist Gegenstand des Patentanspruchs 11. Im Gegensatz zu dem Verfahren nach Patentanspruch 1 wird bei diesem Verfahren die andere Deckschicht direkt von dem Karosserieblech gebildet.

Die aufgeklebte Lagestruktur sorgt für eine hohe Festigkeit des Karosseriebauteils bei geringem Gewicht. Insbesondere die Verwindungssteifigkeit ist sehr hoch. Außerdem hat das erfindungsgemäße Karrosseriebauteil gute akkustische Eigenschaften und ein ausgezeichnetes Korrosionsverhalten.

Als Klebemittel wird bevorzugt ein gekapseltes und wärmeaktivierbares Klebesystem verwendet, das bei einer Temperatur von über 165° C aktiviert wird und dann ausreagiert. Die Lagestruktur und das Karosserieblech werden durch Druck und gleichzeitige Wärmezufuhr zusammengefügt. Das Karosseriebauteil hat dann eine Wärmestandfestigkeit, die oberhalb von 200° C liegt.

Vor dem Zusammenfügen können gekapselte oder mit Mikrokapseln versehene Schaumsysteme zwischen Lagestruktur und Karosserieblech eingebracht werden, die während des Zusammenfügens aktiviert werden. Hierdurch wird ein gute Wärme- und Schalldämmung erreicht.

Die Deckschicht ist vorzugsweise ein Aluminiumblech.

Als Karosseriebauteile können mit dem erfindungsgemäßen Verfahren beispielsweise Autodächer, Motorhauben, KofferraumdeckelTüren oder andere dreidimensional verformte Bauteile hergestellt werden.

Ausführungsbeispiele der Erfindung werden nachfolgend anhand von Zeichnungen näher erläutert. Es zeigt:
- Fig. 1: eine Draufsicht auf eine Zwischenschicht einer ersten Ausführungsform eines Sandwich-Paneels,
- Fig. 2: eine erste Variante einer napfartigen Vertiefung,
- Fig. 3: eine zweite Variante einer napfartigen Vertiefung,
- Fig. 4: schematisch den Ablauf eines Verfahrens zur Herstellung eines Sandwich-Paneels,
- Fig. 5: eine auseinandergezogene Darstellung einer zweiten Ausführungsform des Sandwich-Paneels in Seitenansicht,
- Fig. 6: eine auseinandergezogene Darstellung des Sandwich-Paneels von Fig. 5 in Draufsicht,
- Fig. 7: eine doppellagige Zwischenschicht,
- Fig. 8: eine Seitenansicht einer dritten Ausführungsform eines Sandwich-Paneels mit einer doppellagigen Zwischenschicht,
- Fig. 9: eine Seitenansicht einer vierten Ausführungsform eines Sandwich-Paneels mit einer doppellagigen Zwischenschicht.
- Fig. 10: eine Lagestruktur zur Herstellung eines Autodachs,
- Fig. 11: einen Teilquerschnitt eines Autodachs,
- Fig. 12: die Einzelheit XII von Fig. 11.

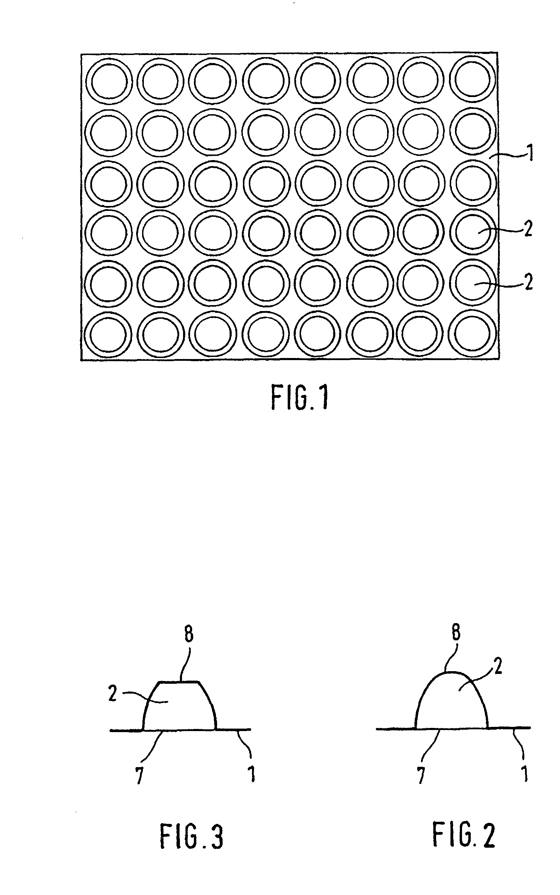

Die in Fig. 1 gezeigte Zwischenschicht 1 besteht aus einer flexiblen Metallfolie, in die eine Vielzahl von Vertiefungen 2 gleichmäßig verteilt in eine Richtung eingeprägt sind. Dies kann z.B. durch Pressen oder durch Tiefziehen erfolgen.

Die flexible Metallfolie der Zwischenschicht 1 kann beispielsweise aus Al, einer Al-Legierung bzw. aus Cu oder einer Cu-Legierung oder anderen zieh- oder prägbaren Metallen bestehen. Gewöhnlich werden 10 µm bis 100 µm dicke Metallfolien verwendet. In den meisten Anwendungsbeispielen hat die flexible Metallfolie jedoch eine Dicke von 20 µm bis 100 µm.

Das Material der flexiblen Metallfolie der Zwischenschicht 1 hat bevorzugt einen Elastizitätsmodul von mindestens 70 x 10³ N/mm² bei Metallen (z.B. Aluminium).

Die napfartigen Vertiefungen 2 können verschiedenartige Gestaltungen aufweisen. Zwei besonders zweckmäßige Formen der napfartigen Vertiefungen 2 zeigen die Figuren 2 und 3.

Die Vertiefung 2 von Fig. 2 hat die Form eines Halbellipsoids, während die Vertiefung 2 von Fig. 3 die Form eines Halbellipsoids hat, das an seinem freien Ende 8 gerade abgeschnitten ist.

Die napfartigen Vertiefungen 2 können auch sphärisch, zylinderartig, kegelstumpfartig oder pyramidenstumpfartig geformt werden. Der Durchmesser der napfartigen Vertiefungen entspricht vorzugsweise ungefähr der Dicke der zur Zwischenschicht verformten flexiblen Metallfolie.

Nachdem in der flexible Metallfolie zur Bildung der Zwischenschicht 1 die napfartigen Vertiefungen 2 ausgebildet wurden, wird auf beiden Seiten der Zwischenschicht 1 eine Deckschicht 3 bzw. 4 angebracht. Dabei wird bei jeder Vertiefung 2 zunächst die Öffnung 7 der Vertiefung 2 durch die eine Deckschicht 3 verschlossen und erst danach die andere Deckschicht 4 mit dem freien Ende 8 der entsprechenden Vertiefung 2 verbunden.

Dies ist wichtig, da durch die Verschließung der Öffnung 7 der Vertiefung 2 mittels der Deckschicht 3 ein Luftpolster in der Vertiefung 2 gebildet wird, das verhindert, daß die aus flexiblem Material bestehende Vertiefung 2 bei der Anbringung der anderen Deckschicht 4 zusammengedrückt wird.

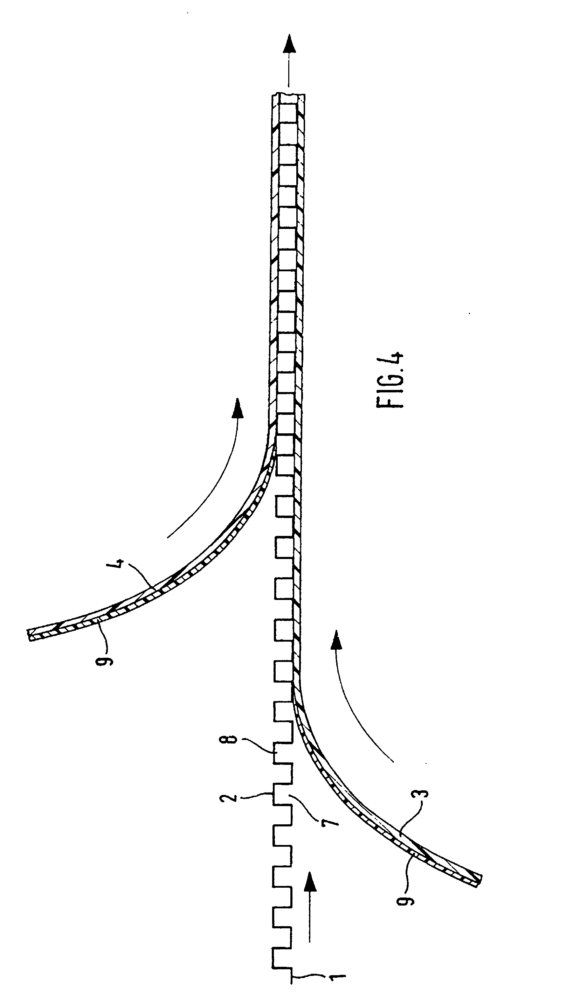

Die letztgenannten Verfahrensschritte sind schematisch in Fig. 4 dargestellt. Die Pfeile in Fig. 4 geben die Bewegungsrichtung der einzelnen Komponenten an. Die Zwischenschicht 1 wird kontinuierlich in einer Ebene transportiert. Eine Deckschicht 3, die auf der der Zwischenschicht 1 zugewandten Seite mit einem Klebemittel 9, z.B. einem Polyurethankleber beschichtet ist, wird der mit den Öffnungen 7 der Vertiefungen 2 versehen Seite der Zwischenschicht 1 kontinuierlich zugeführt und mit dieser verklebt, wodurch die Öffnungen 7 durch die Deckschicht 3 verschlossen werden. Die Deckschicht 4, die ebenfalls auf der der Zwischenschicht 1 zugewandten Seite mit einem Klebemittel 9, z.B. einem Polyurethankleber beschichtet ist, wird - in Bewegungsrichtung der Zwischenschicht 1 nach der Deckschicht 4 - der Zwischenschicht 1 zugeführt und mit den freien Enden 8 der Vertiefungen 2 verklebt. Zu diesem Zeitpunkt sind die Öffnungen 7 der Vertiefungen 2 bereits durch die Deckschicht 3 verschlossen. Anschließend wird die so gebildete Sandwichstruktur in Sandwich-Paneele gewünschter Größe geschnitten.

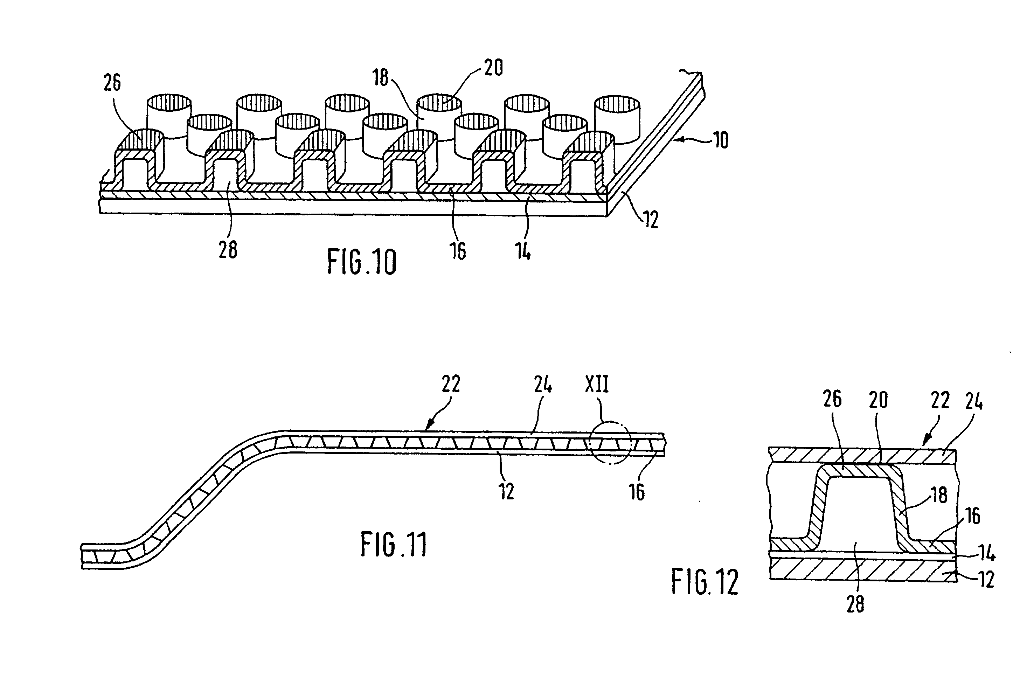

Es ist auch möglich, zunächst nur die Deckschicht 3 auf der Seite der Öffnungen 7 an der Zwischenschicht 1 anzubringen und dieses Bauelement als Lagestruktur zwischenzulagern, die nachstehend anhand von Fig. 10 näher beschrieben wird. Die andere Deckschicht 4 kann später angebracht werden. Dies ermöglicht die wahlweise Anbringung unterschiedlichster Deckschichten 4.

Die Deckschichten 3, 4 können aus Metall, z.B. aus Al oder einer Al-Legierung oder aus Cu oder einer Cu-Legierung bestehen. Die Dicke der Deckschichten 3, 4 beträgt je nach Einsatz im Normalfall 0,5 mm bis 2,0 mm. Die Verwendung dickerer oder dünnerer Deckschichten 3, 4 ist jedoch ebenfalls möglich.

Die Deckschichten 3, 4 können auch aus Kunststoff, beispielsweise aus PET oder PP oder PS oder ABS bestehen oder als Resopalplatte ausgeführt sein. Bevorzugterweise werden dabei Resopalplatten mit einer Dicke von 0,4 mm bis 2,0 mm verwendet.

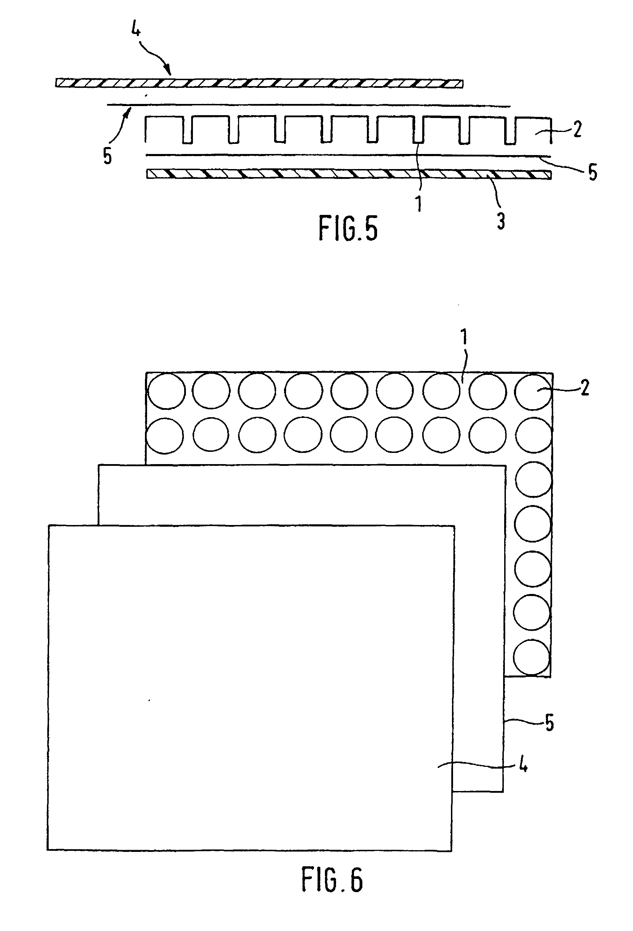

Bei der in Fig. 5 und 6 gezeigten zweiten Ausführungsform des Sandwich-Paneels sind die Deckschichten 3, 4 nicht mit einem Klebemittel beschichtet. Zwischen den Deckschichten 3, 4 und der Zwischenschicht 1 wird jeweils eine doppelseitige Klebefolie 5 angeordnet. Die Aktivierung der Klebefolie 5 erfolgt auf thermischem Wege.

Als Klebemittel kann auch ein gekapseltes Klebesystem verwendet werden. Ein gekapseltes Klebesystem ist ein zweistufiger Kleber. Eine erste Komponente wird bei z.B. bei 70-80° aktiviert. Die andere Komponente wird bei der Verformung zum Bauteil bei einer Temperatur von z.B. 160-180° aktiviert. Dadurch findet ein Übergang vom Thermoplast zum Duroplast statt.

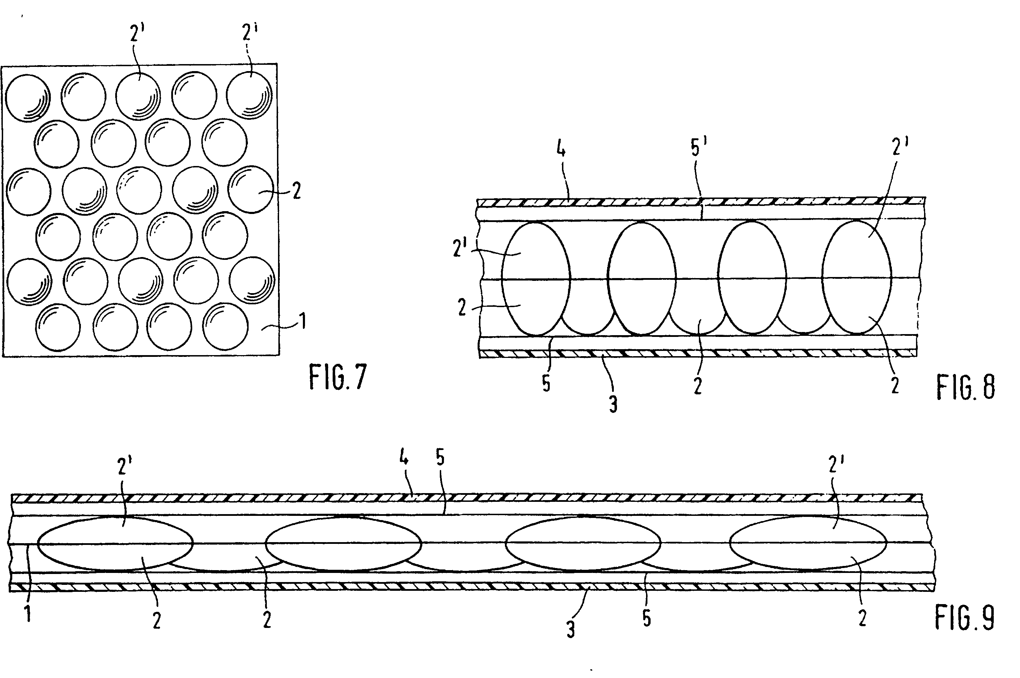

Fig. 7 zeigt eine zweilagige Zwischenschicht 1 mit mehreren sich nach oben erstreckenden Vertiefungen 2' und mehreren sich nach unten erstreckenden Vertiefungen 2, die jeweils in einer flexiblen Metallfolie ausgebildet sind. Es ist abwechselnd eine Reihe von Vertiefungen 2 und eine angrenzende Reihe vorgesehen, in der einer Vertiefungen 2 eine Vertiefung 2' folgt. Die beiden Metallfolien sind miteinander verklebt, so daß eine Metallfolie die Deckschicht bildet, die die Vertiefungen 2 bzw. 2'der anderen Metallfolie verschließt. Es ist jedoch auch möglich, die Vertiefungen 2, 2' jeder Metallfolie durch eine Deckschicht zu verschließen und diese Deckschichten miteinander zu verbinden.

Die zweilagige Zwischenschicht 1 von Fig. 7 ist in die zweite Ausführungsform des Sandwich-Paneels eingesetzt, die in Fig. 8 gezeigt ist. Zwischen den freien Enden der Vertiefungen 2, 2' und den zugeordneten Deckschichten 3 bzw. 4 ist jeweils eine doppelseitige Klebefolie 5 bzw. 5' angeordnet. Die Vertiefungen 2, 2' heben jeweils die Form eines halben langgestreckten Ellipsoids.

Dadurch, daß weniger sich nach oben erstreckende Vertiefungen 2' als sich nach unten erstreckende Vertiefungen 2 vorgesehen sind, ist der Biegewiderstand des Sandwich-Paneels in eine Richtung größer als in die andere Richtung, so daß das Sandwich-Paneel gebogen werden kann, um seine Form den Einbaubedingungen entsprechend anzupassen.

Die dritte Ausführungsform von Fig. 9 unterscheidet sich von der zweiten Ausführungsform durch die Form der Vertiefungen 2, 2', die hier in Form eines zusammengedrückten Ellipsoids ausgebildet sind.

Fig. 10 zeigt eine Lagestruktur 10 zur Herstellung des in Fig. 11 gezeigten Autodachs 22, das eine Alumiumtafel 10, eine mit napfartigen Vertiefungen 18 versehene Aluminiumfolie 16 sowie ein verformtes Karosserieblech 24 umfasst, die miteinander verklebt sind.

Die Lagestruktur 10 umfasst die Aluminiumtafel 12, auf deren oberer Oberfläche eine doppelseitige Klebefolie 14 aufgeklebt ist. Auf der der Aluminiumtafel 12 entgegengesetzten Seite der Klebefolie 14 ist die Aluminiumfolie 16 aufgeklebt, in die eine Vielzahl von napfartigen zylinderförmigen Vertiefungen 18 in eine Richtung eingeprägt ist. Die Aktivierung der Klebefolie 14 erfolgte auf thermischen Wege. Durch die Klebefolie 14 werden die Öffnungen 28 der Vertiefungen 18 der Aluminiumfolie 16 luftdicht verschlossen. Die Kopf flächen 26 der Vertiefungen 18 sind eben und verlaufen parallel zur Alumiumtafel 12 auf einer Höhe.

Auf den Kopfflächen 26 der Vertiefungen 18 ist jeweils ein gekapseltes Klebesystem 20 angebracht, dessen erste Komponente bei 70-80° C aktiviert wurde. Die andere Komponente hat eine Aktivierungstemperatur von 160-180° C.

In diesem Zustand kann die Lagerstruktur 10 zwischengelagert werden.

Zur Herstellung des in Fig. 11 gezeigten Autodachs 22 wird die Lagestruktur 10 in einem Presswerkzeug auf die Innenseite eines bereits verformten Karosserieblechs 24 so aufgelegt, dass die Kopfflächen 26 an dem Karosserieblech 24 anliegen, wobei das gekapselte Klebesystem 20 zwischen dem Karosserieblech 24 und den Kopfflächen 26 angeordnet ist.

Anschließend werden die Lagestruktur 10 und das Karosserieblech 24 unter Druck zusammengefügt, wobei gleichzeitig Wärme zugeführt wird, deren Temperatur oberhalb der Aktivierungstemperatur der zweiten Komponente des gekapselten Klebesystems 20 liegt. Dadurch findet ein Übergang des Klebesystems 20 vom Thermoplast zum Duroplast statt, wodurch ein thermostabiler Verbund gebildet wird.

Als Karosseriebleche 24 werden vorzugsweise Stahlbleche oder Aluminiumbleche mit einer Dicke von unter 0,6 mm verwendet. Die Dicke der Aluminiumtafel 12 liegt vorzugsweise im Bereich von 100 bis 200 µ. Die Vertiefungen 18 haben vorzugsweise einen Außendurchmesser von 5 bis 8 mm, eine Höhe von 2 bis 5 mm und sind in einem Abstand von 2 bis 5 mm gleichmäßig verteilt angeordnet. Anstatt der Klebefolie 14 kann auch ein anderes thermoplastisches oder gekapseltes Klebemittel verwendet werden.

Vor dem Zusammenfügen können gekapselte oder mit Mikrokapseln versehene Schaumsysteme zwischen Lagestruktur und Karosserieblech eingebracht werden, die während des Zusammenfügens aktiviert werden. Hierdurch wird ein gute Wärme- und Schalldämmung erreicht.

## Patentansprüche

1. Verfahren zur Herstellung eines Sandwich-Paneels mit folgenden Schritten:
- Ausbilden einer Vielzahl von napfartigen Vertiefungen in einer flexiblen Metallfolie und
- Aufbringen einer Deckschicht auf jede Seite der flexiblen Metallfolie, wobei bei jeder napfartigen Vertiefung zunächst die Öffnung durch eine Deckschicht verschlossen und dann die andere Deckschicht an den freien Enden der Vertiefungen angebracht wird.

2. Verfahren nach Anspruch 1, **dadurch gekennzeichnet, daß** das Einprägen der napfartigen Vertiefungen durch Pressen oder durch Tiefziehen erfolgt.

3. Verfahren nach einem der vorhergehenden Ansprüche, **dadurch gekennzeichnet, daß** die napfartigen Vertiefungen im wesentlichen ellipsoidal oder sphärisch oder zylinderartig oder kegelstumpfartig oder pyramidenstumpfartig geformt werden.

4. Verfahren nach einem der vorhergehenden Ansprüche, **dadurch gekennzeichnet, daß** mindestens eine der Deckschichten auf die flexible Metallfolie aufgeklebt wird.

5. Verfahren zur Herstellung eines Karosseriebauteils mit folgenden Schritten:
- Ausbilden einer Vielzahl von in eine Richtung zeigenden napfartigen Vertiefungen in einer flexiblen Metallfolie,
- Ausbilden einer Lagestruktur durch Anbringen einer Deckschicht auf die Seite der flexiblen Metallfolie, an der sich die Öffnungen der napfartigen Vertiefung befinden,
- Auftragen eines Klebemittels auf die Kopfflächen der Vertiefungen,
- Zusammenfügen der Lagestruktur mit einem Karosserieblech, wobei die Kopfflächen der Lagestruktur mit dem Karosserieblech mittels des Klebemittels verklebt werden.

6. Verfahren nach Anspruch 5, **dadurch gekennzeichnet, daß** die Lagestruktur und das Karosserieblech durch Druck und gleichzeitige Wärmezufuhr zusammengefügt werden.

7. Verfahren nach Anspruch 5 oder 6, **dadurch gekennzeichnet, daß** das Klebemittel ein gekapseltes und wärmeaktivierbares Klebesystem ist.

8. Verfahren nach einem der Ansprüche 5 bis 7, **dadurch gekennzeichnet, daß** vor dem Zusammenfügen Schaumsysteme zwischen Lagestruktur und Karosserieblech eingebracht werden, die während des Zusammenfügens aktiviert werden.

9. Verfahren nach einem der Ansprüche 5 bis 8, **dadurch gekennzeichnet, daß** die Deckschicht ein Aluminiumblech ist.

## Revendications

1. Procédé pour produire un panneau sandwich, avec les étapes suivantes:
- formation d'une pluralité d'approfondissements semblables à des godets dans une feuille métallique flexible, et
- application d'une couche de recouvrement sur chaque côté de la feuille métallique flexible, l'ouverture de chaque approfondissement semblable à un godet étant d'abord fermée par une couche de recouvrement et l'autre couche de recouvrement étant ensuite appliquée sur les extrémités libres des approfondissements.

2. Procédé selon la revendication 1, **caractérisé en ce que** l'estampage des approfondissements semblables à des godets est réalisé par pression ou par emboutissage.

3. Procédé selon l'une quelconque des revendications précédentes, **caractérisé en ce que** les approfondissements semblables à des godets sont substantiellement formés de manière ellipsoïdale ou sphérique ou en forme de cylindre ou de tronc de cône ou de pyramide tronquée.

4. Procédé selon l'une quelconque des revendications précédentes, **caractérisé en ce qu'**au moins l'une des couches de recouvrement est collée sur la feuille métallique flexible.

5. Procédé pour produire un élément de carrosserie, avec les étapes suivantes.
- formation d'une pluralité d'approfondissements semblables à des godets, tournés dans une direction, dans une feuille métallique flexible,
- formation d'une structure en couches par l'application d'une couche de recouvrement sur le côté de la feuille métallique flexible, sur lequel se trouvent les ouvertures de l'approfondissement semblable à un godet,
- application d'un adhésif sur les surfaces de tête des approfondissements,
- assemblage de la structure en couches avec une tôle de carrosserie, les surfaces de tête de la structure en couches étant collées avec la tôle de carrosserie au moyen de l'adhésif.

6. Procédé selon la revendication 5, **caractérisé en ce que** la structure en couches et la tôle de carrosserie sont assemblées par pression et apport simultané de chaleur.

7. Procédé selon la revendication 5 ou 6, **caractérisé en ce que** l'adhésif est un système de colle étanche et pouvant activer la chaleur.

8. Procédé selon l'une quelconque des revendications 5 à 7, **caractérisé en ce qu'**avant l'assemblage, des systèmes en mousse sont appliqués entre la structure en couches et la tôle de carrosserie, ceux-ci pouvant être activés pendant l'assemblage.

9. Procédé selon l'une quelconque des revendications 5 à 8, **caractérisé en ce que** la couche de recouvrement est une tôle d'aluminium.

## Claims

1. A method for producing a sandwich panel, comprising the following steps:
- forming a multiplicity of cup-like recesses in a flexible metal foil, and
- applying a covering layer to each side of the flexible metal foil, wherein at each cup-like recess, first of all the opening is closed by one covering layer, and then the other covering layer is applied to the free ends of the recesses.

2. The method as claimed in claim 1, **characterized in that** the cup-like recesses are formed by pressing or by deep-drawing.

3. The method as claimed in one of the preceding claims, **characterized in that** the cup-like recesses are shaped substantially in the form of an ellipsoid or a sphere or a cylinder or a truncated cone or a truncated pyramid.

4. The method as claimed in one of the preceding claims, **characterized in that** at least one of the covering layers is adhesively bonded to the flexible metal foil.

5. A method for producing a body component, comprising the following steps:
- forming a multiplicity of cup-like recesses, which point in one direction, in a flexible metal foil,
- forming a laminated structure by applying a covering layer to that side of the flexible metal foil on which the openings of the cup-like recess are located,
- applying an adhesive to the end faces of the recesses,
- joining the laminated structure to a metal body sheet, the end faces of the laminated structure being adhesively bonded to the metal body sheet by means of the adhesive.

6. The method as claimed in claim 5, **characterized in that** the laminated structure and the metal body sheet are joined by the application of pressure and the simultaneous supply of heat.

7. The method as claimed in claim 5 or 6, **characterized in that** the adhesive is an encapsulated, heat-activatable adhesive system.

8. The method as claimed in one of claims 5 to 7, **characterized in that**, before the joining operation, foam systems, which are activated during the joining, are introduced between the laminated structure and the metal body sheet.

9. The method as claimed in one of claims 5 to 8, **characterized in that** the covering layer is an aluminum sheet.
